# EUROPEAN PATENT APPLICATION

(11) **EP 4 528 171 A1**
(43) Date of publication of application: **26.03.2025**
(21) Application number: 23861896.1
(22) Date of filing: 08.05.2023
(51) Int. Cl.: F24F 11/47, F24F 11/80, F24F 11/61, F24F 11/64, G06Q 10/06

(54) **AIR CONDITIONER AND CONTROL METHOD THEREFOR, AND STORAGE MEDIUM**

(30) Priority: 08.09.2022 CN 202211097899
(71) Applicant: Gree Electric Appliances, Inc. of Zhuhai, Zhuhai, Guangdong 519000 (CN)
(72) Inventor: DONG, Mingzhu, Zhuhai, Guangdong 519000 (CN); ZHAO, Baiyang, Zhuhai, Guangdong 519000 (CN); NI, Yi, Zhuhai, Guangdong 519000 (CN); XUE, Handong, Zhuhai, Guangdong 519000 (CN); FU, Yingsheng, Zhuhai, Guangdong 519000 (CN)
(74) Representative: Reddie & Grose LLP
(86) International application number: PCT/CN2023/092755
(87) International publication number: WO 2024/051191

(57) **Abstract**

Provided in the present disclosure are an air conditioner and a control method therefor, and a storage medium. The control method for an air conditioner comprises: collecting a time series of operation data of an air conditioner; recognizing an indoor temperature response time and a terminal temperature response time according to the time series of the operation data, and using the indoor temperature response time as a time interval for adjustment nodes of a first time scale, and the terminal temperature response time as a time interval for adjustment nodes of a second time scale; at each adjustment node of the first time scale, controlling operation parameters of the air conditioner by using a first control strategy; and at each adjustment node of the second time scale, controlling the operation parameters of the air conditioner by using a second control strategy.

## Description

### CROSS-REFERENCE TO RELATED APPLICATIONS

The present disclosure is based on and claims the priority to the Chinese application No. 202211097899.4 filed on September 8, 2022, the disclosure of which is incorporated by reference herein in its entirety.

### TECHNICAL FIELD

The present disclosure relates to the technical field of air conditioner control, and particularly to an air conditioner and a control method therefor, and a storage medium.

### BACKGROUND

Optimization of air conditioner control has always been an research direction of air conditioner manufacturers, so as to control minimum energy consumption of the air conditioner by the optimization of the air conditioner control.

In the related art, according to local climate features and operation characteristics of air conditioning systems, in consideration of influences of changes in temperature and humidity inside and outside a building and a change in the number of persons, an operation mode corresponding to an optimal COP (Coefficient Of Performance) is found by applying statistics or machine learning, so that related operation characteristic parameters and pre-control time are adjusted, to reach a balance between comfort and energy conservation.

### SUMMARY

The present disclosure provides an air conditioner and a control method therefor, and a storage medium.

A control method for an air conditioner provided in the present disclosure comprises:
collecting a time series of operation data of an air conditioner;
recognizing response time of an indoor temperature and response time of a terminal temperature according to the time series of the operation data, and setting the response time of the indoor temperature as a time interval for adjustment nodes of a first time scale, and setting the response time of the terminal temperature as a time interval for adjustment nodes of a second time scale;
at each of the adjustment nodes of the first time scale, controlling operation parameters of the air conditioner by applying a first control strategy; and
at each of the adjustment nodes of the second time scale, controlling the operation parameters of the air conditioner by applying a second control strategy.

In some embodiments, in a case where the adjustment node of the first time scale and the adjustment node of the second time scale coincide at a certain moment, controlling the operation parameters of the air conditioner by applying the first control strategy.

In some embodiments, the first control strategy comprises: predicting a terminal temperature according to a predicted outdoor temperature and a preset indoor temperature, and adjusting the operation parameters of the air conditioner according to the predicted terminal temperature.

In some embodiments, in a case where the air conditioner operates in a cooling working condition, the terminal temperature is predicted, according to the predicted outdoor temperature and the preset indoor temperature, by a formula Te=a*Tout+b*Tin, wherein 'Te' is a predicted evaporation temperature, Tout is the predicted outdoor temperature, 'Tin' is the preset indoor temperature, 'a' is an air temperature influence coefficient in the cooling working condition, and 'b' is a room temperature influence coefficient in the cooling working condition.

In some embodiments, in a case where the air conditioner operates in a heating working condition, the terminal temperature is predicted, according to the predicted outdoor temperature and the preset indoor temperature, by a formula Tc=c*Tout+d*Tin, wherein Tc is a predicted condensation temperature, Tout is the predicted outdoor temperature, Tin is the preset indoor temperature, c is an air temperature influence coefficient in the heating working condition, and d is a room temperature influence coefficient in the heating working condition.

In some embodiments, in a case where the air conditioner has n air conditioner terminals, the preset indoor temperature is calculated by a formula Tin=(Tin_1+···+Tin_n)/n, wherein n≥2, and 'Tin_ 1',···, 'Tin_n' are preset indoor temperatures of the air conditioner terminals.

In some embodiments, the operation parameters of the air conditioner are adjusted according to the predicted terminal temperature, for example, by applying a PID method or a fuzzy control method.

In some embodiments, the outdoor temperature is predicted according to weather forecast or historical weather data.

In some embodiments, the second control strategy is a strategy for obtaining minimum energy consumption of the air conditioner, and the second control strategy enables a temperature change difference of the terminal temperature to fall within a preset difference range.

In some embodiments, the terminal temperature comprises one of an evaporation temperature, a condensation temperature, an outlet water temperature, a return water temperature, an outlet air temperature, a return air temperature, and a radiator temperature of the air conditioner terminal.

An air conditioner provided in the present disclosure comprises:
a data collection module configured to collect a time series of operation data of the air conditioner;
a time scale recognition module configured to recognize response time of an indoor temperature and response time of a terminal temperature according to the time series of the operation data, and use the response time of the indoor temperature as a time interval for adjustment nodes of a first time scale, and setting the response time of the terminal temperature as a time interval for adjustment nodes of a second time scale; and
a control module configured to, at each of the adjustment nodes of the first time scale, control operation parameters of the air conditioner by applying a first control strategy, and at each of the adjustment nodes of the second time scale, control the operation parameters of the air conditioner by applying a second control strategy.

In some embodiments, the control module comprises: a terminal temperature prediction module configured to predict a terminal temperature, so that the control module controls the operation parameters of the air conditioner according to the predicted terminal temperature and the first control strategy.

In some embodiments, the control module further comprises: a unit actuator control module configured to control, according to the second control strategy, the operation parameters of the air conditioner after controlled by the first control strategy, so that a temperature change difference of the terminal temperature meets a preset difference range.

A computer-readable storage medium provided in the present disclosure is configured to store a computer program which, when executed, performs the control method for an air conditioner according to the above technical solution.

In the present disclosure, considering that an output capacity (cooling volume/heating volume) of an air conditioner is mainly decided by a temperature difference between a terminal evaporation temperature or condensation temperature and an indoor ambient temperature, by collecting a time series of operation data of the air conditioner, a long time scale (a first time scale) and a short time scale (a second time scale) for the air conditioner control are obtained, and a system evaporation/condensation temperature of the multi-split air conditioner is controlled on the long time scale (the first time scale), so that the output capacity of the air conditioner is matched with a cooling/heating load of a building, guaranteeing a constant indoor temperature, reducing a waste of unit energy, and improving thermal comfort and energy conservation of the air conditioner; by fine-tuning unit actuators of the multi-split air conditioner on the short time scale (the second time scale), a combination between the actuators is optimized, further reducing operation energy consumption of the multi-split air conditioner. Meanwhile, since in the present disclosure, the actuators of the multi-split air conditioner are not directly controlled but are fine-tuned when the system evaporation/condensation temperature is kept stable, operation reliability in the control process of the multi-split air conditioner is improved.

### BRIEF DESCRIPTION OF THE DRAWINGS

The present disclosure is described in detail below with reference to embodiments and drawings, wherein:
Fig. 1 is a main flow diagram of some embodiments of the present disclosure.
Fig. 2 is a detailed flow diagram of some embodiments of the present disclosure.
Fig. 3 is a structural block diagram of some embodiments of the present disclosure.

### DETAILED DESCRIPTION

In order to make the technical problems to be solved, technical solutions and advantageous effects of the present disclosure clearer and more understandable, the present disclosure is further described in detail below with reference to the accompanying drawings and the embodiments. It should be understood that the specific embodiments described herein are merely used for illustrating the present disclosure and are not intended to limit the present disclosure.

Therefore, a feature presented in this description will serve to describe one of features of some embodiments of the present disclosure, and does not imply that embodiments of the present disclosure have the described feature. Furthermore, it should be noted that many features are described in this description. Although certain features are combined together to show system design, these features can be used in other unspecified combinations. Therefore, the described combinations are not intended to be limiting unless otherwise specified.

In the related art, according to local climate features and operation characteristics of air conditioning systems, in consideration of influences of changes in temperature and humidity inside and outside a building and a change in the number of persons, an operation mode corresponding to an optimal COP is found by applying statistics or machine learning, so that the related operation characteristic parameters and pre-control time are adjusted, to reach a balance between comfort and energy conservation. The inventors have realized that, this method directly controls air conditioner actuators, such as compressors, fans and valves, greatly influencing the operation reliability of the system; meanwhile, the method does not consider a difference in response time between an indoor temperature (long response time) and an air conditioning system state (short response time), resulting in an excessively long or short control time scale of the air conditioner actuator, and limiting the control effect of the air conditioner. Therefore, there is an urgent need for a control method for an air conditioner with an appropriate control time scale.

A control method for an air conditioner provided in the present disclosure comprises the following steps.

Step 1, collecting a time series of operation data of an air conditioner.

The time series of the operation data of the air conditioner is essentially the operation data of the air conditioner, but since the collected operation data of the air conditioner is collected over time, the corresponding operation data of the air conditioner collected at each sampling time point is provided with a time stamp corresponding to the sampling time point, thereby forming the time series of the operation data of the air conditioner.

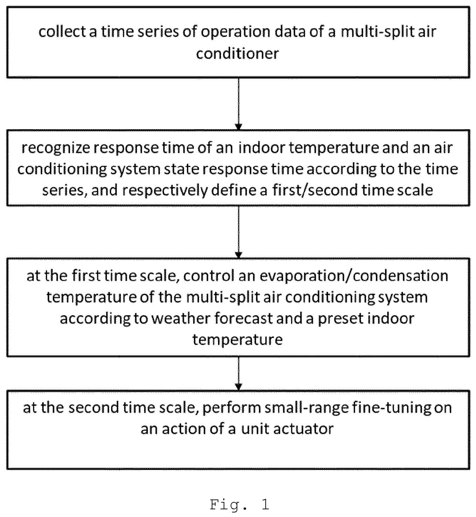

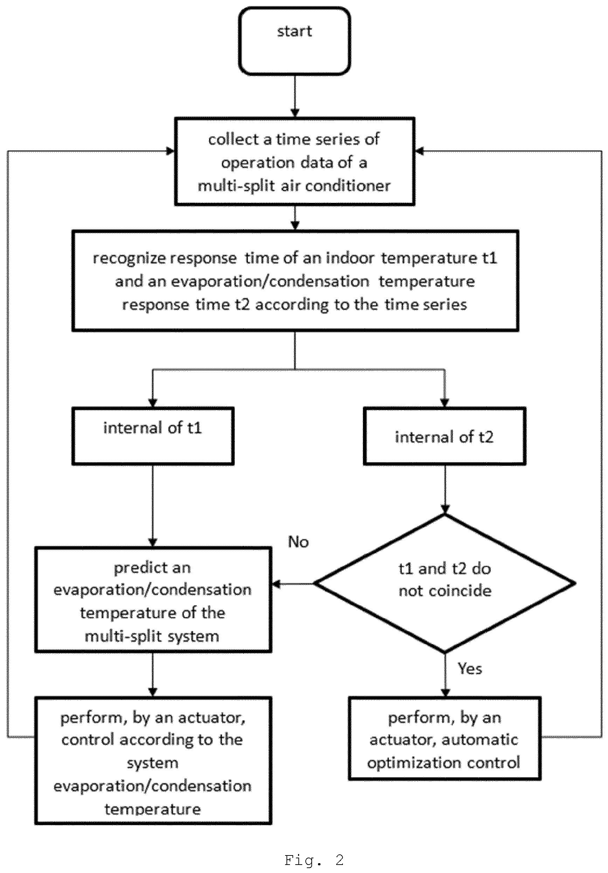

As shown in Figs. 1 and 2, taking a multi-split air conditioner as an example, operation data of the multi-split air conditioner includes an indoor temperature, an outdoor temperature (i.e., an outdoor ambient temperature), a system evaporation temperature, a system condensation temperature, and an actuator action (including a compressor frequency, an outdoor unit fan frequency, an opening of an indoor unit expansion valve, an opening of an outdoor unit expansion valve, and the like) of a room wherein each indoor unit is located. A time series of the operation data of the multi-split air conditioner refers to numerical values of each parameter along a time sequence; taking the indoor temperature as an example, a time series thereof is Tin(0),Tin(1),Tin(2)··· Tin(k), an interval time of the time series is a sampling time interval for the operation data of the multi-split air conditioner; if the sampling time interval is 1 minute, k is a corresponding time stamp, and a specific time of each sampling can be known through the time stamp, as well as a sampling start time and the sampling time interval.

Step 2, recognizing response time of an indoor temperature and response time of a terminal temperature according to the time series of the operation data, and setting the response time of the indoor temperature as a time interval for adjustment nodes of a first time scale, and setting the response time of the terminal temperature as a time interval for adjustment nodes of a second time scale. In the present disclosure, the response times for the two temperatures that reflect user control instructions of the air conditioner are used as the time intervals for different adjustment nodes, so that the response time for the control of the air conditioner is more in line with the reality of the air conditioner, and there are a plurality of time scales, so that the air conditioner is correspondingly adjusted more suitably according to the adjustment nodes of the two time scales. By means of the above time series of the operation data of the air-conditioner, the response time of the indoor temperature can be obtained, which is a time for the indoor temperature to approach a set indoor temperature (target temperature) after the air conditioner operates, starting from the current indoor temperature. For example, response time of an indoor temperature t1 refers to a time required for the indoor temperature to reach 90% of a final value with respect to an evaporation/condensation temperature step signal. However, the response time of the terminal temperature refers to a response time for a related temperature of the air conditioner terminal, the terminal temperature comprising one of an evaporation temperature, a condensation temperature, an outlet water temperature, a return water temperature, an outlet air temperature, a return air temperature and a radiator temperature of the air conditioner terminal. For example, an air conditioner terminal is an indoor unit, then a terminal temperature at this time is an evaporation temperature of a heat exchanger of the indoor unit (in a cooling mode), and for another example, it is a condensation temperature of the heat exchanger of the indoor unit (in a heating mode), an outlet air temperature of the indoor unit, or the like. Certainly, the air conditioner terminal referred to in the present disclosure is not limited to the indoor unit, and the air conditioner terminal is in a different form according to a different type of air conditioner, for example, a terminal temperature corresponding to a terminal of a water cooling unit is an outlet water temperature, a return water temperature, or the like. For another example, in a case where the air conditioner is an underfloor heating air conditioner, a terminal temperature refers to a floor temperature, a radiator temperature, or the like. Taking an example that a terminal temperature is an evaporation/condensation temperature of an indoor unit of an air conditioner, a response time t2 for the evaporation/condensation temperature refers to a time required for the evaporation/condensation temperature of the air conditioning system to reach 90% of a final value with respect to a step signal of an action (mainly a compressor frequency) of an air conditioner actuator.

For the two response times in the present disclosure, 90% is taken as an example, but a specific demand for the response time is not limited in the present disclosure, and those skilled in the art can adjust the specific demand for the response time according to different types of air conditioners and different regions wherein the air conditioners are applied.

Step 3, at each of the adjustment nodes of the first time scale, controlling operation parameters of the air conditioner by applying a first control strategy, and at each of the adjustment nodes of the second time scale, controlling the operation parameters of the air conditioner by applying a second control strategy.

Since the response time of the terminal temperature is generally faster than the response time of the indoor temperature , a minimum unit of the first time scale is greater than that of the second time scale.

In some embodiments, the control on the air conditioner in the second control strategy is actually a fine tune on the basis of the control in the first control strategy. For example, the first control strategy is a comfort control strategy, such as a balance control strategy wherein a plurality of factors among comfort, energy conservation, and reliability are considered, and the second control strategy is an energy conservation control strategy, or other control strategies, such as some control strategies wherein energy conservation is mainly considered while other performances of the air conditioner are also considered.

According to the present disclosure, by setting the node of each time scale as one adjustment node for the control of the air conditioner, the air conditioner is controlled from a plurality of time scales, thereby avoiding an excessively long or short control time scale of the air conditioner actuator due to a single time scale for adjustment of the air conditioner in the related art. Meanwhile, the output capacity of the air conditioner is matched with a cooling/heating load of a building, ensuring a constant indoor temperature, and reducing a waste of unit energy.

Also taking the indoor unit of the air conditioner as an example, the response time of the indoor temperature t1 and the evaporation/condensation temperature response time t2 correspond to a long time scale and a short time scale in the multi-split control, respectively, and the response time of the indoor temperature t1 is greater than the evaporation/condensation temperature response time t2. For example, by the step S2, it is obtained that the response time of the indoor temperature t1 is 1 hour, which represents a time for the indoor temperature to reach stabilization after the multi-split system evaporation/condensation temperature changes; and that the evaporation/condensation temperature response time t2 is 5 minutes, which represents a time for the multi-split system evaporation/condensation temperature to reach stabilization after an actuator action changes.

In some embodiments, the above first control strategy of the present disclosure comprises: predicting a terminal temperature according to a predicted outdoor temperature and a preset indoor temperature, and adjusting the operation parameters of the air conditioner according to the predicted terminal temperature. The predicting a terminal temperature according to a predicted outdoor temperature and a preset indoor temperature, mainly considers that a cooling/heating load of a building is mainly decided by a temperature difference between an indoor temperature and an outdoor ambient temperature of the building, so that this method has wide applicability. In a case where the air conditioner operates in a cooling working condition, the terminal temperature is predicted, according to the predicted outdoor temperature and the preset indoor temperature, by a formula Te=a*Tout+b*Tin, wherein Te is a predicted evaporation temperature, Tout is the predicted outdoor temperature, Tin is the preset indoor temperature, 'a' is an air temperature influence coefficient in the cooling working condition, and b is a room temperature influence coefficient in the cooling working condition. In a case where the air conditioner operates in a heating working condition, the terminal temperature is predicted, according to the predicted outdoor temperature and the preset indoor temperature, by a formula Tc=c*Tout+d*Tin, wherein Tc is a predicted condensation temperature, Tout is the predicted outdoor temperature, Tin is the preset indoor temperature, c is an air temperature influence coefficient in the heating working condition, and d is a room temperature influence coefficient in the heating working condition.

The cooling/heating load of the building is mainly decided by the temperature difference between the indoor temperature and the outdoor ambient temperature of the building, and when a fan of the indoor unit has a constant rotational speed, the output capacity (cooling/heating volume) of the air conditioner is mainly decided by a temperature difference between a system evaporation temperature (in the cooling working condition) or condensation temperature (in the heating working condition) and the indoor temperature. In order to enable the output capacity of the air conditioner to match the cooling/heating load of the building, the evaporation temperature or condensation temperature of the indoor unit of the air conditioner is adjusted according to a future air temperature and the preset indoor temperature of the indoor unit.

Taking the multi-split air conditioner as an example, in the cooling working condition, the predicted evaporation temperature is calculated by applying a formula Te=a*Tout+b*(Tin_1+Tin_2+ ...+ Tin_n)/n, wherein Te is a predicted evaporation temperature of a heat exchanger of an indoor unit, Tout is the outdoor temperature, i.e., the outdoor ambient temperature, Tin_1, Tin_2,...,Tin_n are preset indoor temperatures (target temperatures) of rooms wherein indoor units (n indoor units in total) are located, the coefficient 'a' is the air temperature influence coefficient in the cooling working condition, and in some embodiments, is in a range of, for example, [-2, 0], and the coefficient b is the room temperature influence coefficient in the cooling working condition, and in some embodiments, is in a range of, for example, [0, 2], and n is greater than or equal to 2. In the heating working condition, the predicted condensation temperature is calculated by applying a formula Tc=c*Tout+d*(Tin_1+Tin_2+...+Tin_n)/n, wherein Tc is a predicted condensation temperature of the heat exchanger of the indoor unit, the coefficient c is the air temperature influence coefficient in the heating working condition, and in some embodiments, is in a range of, for example, [-2, 0], the coefficient d is the room temperature influence coefficient in the heating working condition, and in some embodiments, is in a range of, for example, [0, 2], and n is greater than or equal to 2.

In some embodiments, in the first control strategy, in addition to the outdoor temperature and the preset indoor temperature, a change in the number of persons indoors, a change in an environment indoors and the like are also considered to predict the terminal temperature, that is, more factors are considered for the prediction of the terminal temperature, so that the predicted terminal temperature better meets a corresponding requirement of a scene, and finally, the operation parameters of the air conditioner are adjusted according to the predicted terminal temperature.

After the predicted terminal temperature is obtained with the above method, in the present disclosure, when the operation parameters of the air conditioner are adjusted according to the predicted terminal temperature, the adjustment is performed by applying, for example, a PID (proportion integration differentiation) control method, or a fuzzy control method.

Also taking the multi-split air conditioner as an example, after a predicted value of the system evaporation/condensation temperature is obtained, the multi-split actuator (such as a compressor, an outdoor unit fan, and an indoor/outdoor unit expansion valve) adjusts the system evaporation/condensation temperature to the predicted value according to the PID, fuzzy control, or the like. It should be noted that the evaporation temperature and the condensation temperature in the control process are within their respective adjustment ranges, which are [5,20] and [30,45], respectively, with units of °C. That is to say, when a strategy with minimum energy consumption of the air conditioner is obtained by applying a corresponding algorithm in the second control strategy (such as an energy conservation control strategy), a constraint for the algorithm is to make a temperature change difference of the terminal temperature fall within a preset difference range. In some embodiments, when the second control strategy is an energy conservation control strategy, the second control strategy is to obtain a strategy with minimum energy consumption of the air conditioner by an automatic optimization algorithm, and a constraint for the automatic optimization algorithm is to make the temperature change difference of the terminal temperature meet the preset difference range. The specific kind of the automatic optimization algorithm is not limited in the present disclosure, for example, a genetic algorithm or a particle swarm optimization algorithm is adopted, and it is not limited to the two automatic optimization algorithms listed in the present disclosure.

In some embodiments, the predicted outdoor temperature is predicted, for example, according to weather forecast or historical weather data. With the increasingly accurate prediction of the weather forecast, the use of the outdoor temperature predicted by the weather forecast in the present disclosure enables the air conditioner to be controlled correspondingly in advance, ensuring the stability of the temperature of the air conditioner for a long time.

Since a plurality of time scales are involved in the present disclosure, there will be a time node wherein the plurality of time scales coincide; in a case where the adjustment node of the first time scale and the adjustment node of the second time scale coincide at a certain moment, the operation parameters of the air conditioner are controlled by applying the first control strategy, avoiding control confusion occurring in a case where the adjustment nodes of the two time scales coincide at a certain moment. Taking the multi-split air conditioner as an example, if the interval indoor temperature response time t1 and the interval evaporation/condensation temperature response time t2 both are met at a certain moment, the actuator of the multi-split air conditioner preferentially performs long time scale control, i.e., performs control according to the predicted system evaporation/condensation temperature; if the interval evaporation/condensation temperature response time t2 is met but the interval indoor temperature response time t1 is not met at a certain moment, the multi-split actuator performs short time scale control, i.e., automatic optimization control.

For example, the time interval for the adjustment nodes of the first time scale is 1 hour, the time interval for the adjustment nodes of the second time scale is 7 minutes; in a case where the adjustment nodes of the first time scale and the second time scale do not coincide, when a time node of a certain time scale arrives, a corresponding control strategy is executed, but at a 7-th hour, i.e., 420 minutes, the adjustment nodes of the first time scale and the second time scale coincide at this moment, then the first control strategy is executed at this time. At which moment the adjustment nodes of the first time scale and the second time scale will coincide is related to the time intervals of their adjustment nodes. When the actuator executes automatic optimization control, an action of each actuator is only fine-tuned, with an adjustment range of the compressor frequency within +/-2Hz, an adjustment range of the fan frequency within +/-5Hz, and an adjustment range of the opening of the indoor/outdoor unit expansion valve within +1-5% of a maximum; a combination of the actuators with minimum unit energy consumption is obtained by an optimization algorithm, which maybe a genetic algorithm, a particle swarm optimization algorithm or the like. In addition, the automatic optimization process requires a constraint to be set, for example, a change in the system condensation temperature or evaporation temperature being within ±1'C after the fine tune of the actuator.

In the present disclosure, an air conditioner is also claimed, which comprises at least a data collection module, a time scale recognition module, and a control module.

The data collection module is configured to collect a time series of operation data of an air conditioner. Taking a multi-split air conditioner as an example, a time series of operation data of the multi-split air conditioner refers to numerical values of each parameter along a time sequence; taking an indoor temperature as an example, a time series thereof is Tin(0), Tin(1), Tin(2)···Tin(k), and an interval time for the time series is a sampling time interval for the operation data of the multi-split air conditioner, and if the sampling time interval is 1 minute, k is a corresponding time stamp, so that a specific time of each sampling can be known through the time stamp, as well as a sampling start time and the sampling time interval.

The time scale recognition module recognizes response time of an indoor temperature and response time of a terminal temperature according to the time series of the operation data, and uses the response time of the indoor temperature as a time interval for adjustment nodes of the first time scale, and setting the response time of the terminal temperature as a time interval for adjustment nodes of the second time scale.

The control module, at each of the adjustment nodes of the first time scale, controls operation parameters of the air conditioner by applying a first control strategy, and at each of the adjustment nodes of a second time scale, controls the operation parameters of the air conditioner by applying a second control strategy.

According to the present disclosure, the air conditioner is controlled from a plurality of time scales, thereby avoiding an excessively long or short control time scale of an air conditioner actuator due to a single time scale of adjustment of the air conditioner in the related art. Meanwhile, this enables the output capacity of the air conditioner to be matched with a cooling/heating load of a building, ensuring a constant indoor temperature, and reducing a waste of unit energy.

In some embodiments, the control module comprises a terminal temperature prediction module.

The terminal temperature prediction module is configured to predict a terminal temperature, so that the control module can control the operation parameters of the air conditioner according to the predicted terminal temperature and the first control strategy.

The terminal temperature can quickly reflect a specific situation that the air conditioner operates towards a target temperature, and by predicting the terminal temperature, the operation parameters of the air conditioner can be accurately controlled, ensuring comfort of the air conditioner.

In some embodiments, the control module further comprises a unit actuator control module.

The unit actuator control module is configured to control, according to the second control strategy, the operation parameters of the air conditioner after controlled by the first control strategy, so that a temperature change difference of the terminal temperature meets a preset difference range.

In the present disclosure, fine-tuning, by the unit actuator, the operation parameters of the air conditioner under the first control strategy, is to fine-tune the actuator when the system evaporation/condensation temperature is kept stable, improving operation reliability in the control process of the multi-split air conditioner, while optimizing energy conversation of the air conditioner.

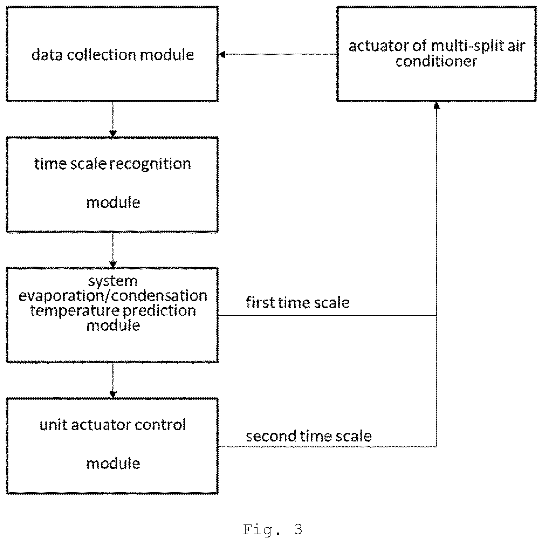

As shown in Fig. 3, taking a multi-split air conditioner as an example, the multi-split air conditioner includes a data collection module, a system evaporation/condensation temperature prediction module (terminal temperature prediction module) and a unit actuator optimization module (also called a unit actuator control module), wherein the data collection module acquires weather forecast data of a weather station and multi-split operation data, the system evaporation/condensation temperature prediction module predicts a system condensation temperature (in a heating mode) or evaporation temperature (in a cooling mode) at a first time scale according to the above data, and the unit actuator optimization module optimizes an actuator action of a unit at a second time scale.

In the present disclosure, a computer-readable storage medium is also claimed, which is configured to store a computer program which, when executed, performs the control method for an air conditioner according to the above technical solution of the present disclosure.

The above description is not intended to limit the present disclosure, and any modifications, equivalent substitutions, and improvements made within the spirit and principle of the present disclosure should fall within the scope of protection of the present disclosure.

## Claims

1. A control method for an air conditioner, comprising:
collecting a time series of operation data of an air conditioner;
recognizing response time of an indoor temperature and response time of a terminal temperature according to the time series of the operation data, and setting the response time of the indoor temperature as a time interval for adjustment nodes of a first time scale, and setting the response time of the terminal temperature as a time interval for adjustment nodes of a second time scale;
at each of the adjustment nodes of the first time scale, controlling operation parameters of the air conditioner by applying a first control strategy; and
at each of the adjustment nodes of the second time scale, controlling the operation parameters of the air conditioner by applying a second control strategy.

2. The control method for the air conditioner according to claim 1, comprising: in a case where the adjustment node of the first time scale and the adjustment node of the second time scale coincide at a certain moment, controlling the operation parameters of the air conditioner by applying the first control strategy.

3. The control method for the air conditioner according to claim 1 or 2, wherein the first control strategy comprises:
predicting a terminal temperature according to a predicted outdoor temperature and a preset indoor temperature; and
adjusting the operation parameters of the air conditioner according to the predicted terminal temperature.

4. The control method for the air conditioner according to claim 3, wherein the predicting the terminal temperature according to the predicted outdoor temperature and the preset indoor temperature comprises:
in a case where the air conditioner operates in a cooling working condition, performing prediction by a formula Te=a*Tout+b*Tin, wherein 'Te' is a predicted evaporation temperature, Tout is the predicted outdoor temperature, 'Tin' is the preset indoor temperature, 'a' is an air temperature influence coefficient in the cooling working condition, and 'b' is a room temperature influence coefficient in the cooling working condition.

5. The control method for the air conditioner according to claim 3 or 4, wherein the predicting the terminal temperature according to the predicted outdoor temperature and the preset indoor temperature comprises:
in a case where the air conditioner operates in a heating working condition, performing prediction by a formula Tc=c*Tout+d*Tin, wherein 'Tc' is a predicted condensation temperature, Tout is the predicted outdoor temperature, 'Tin' is the preset indoor temperature, 'c' is an air temperature influence coefficient in the heating working condition, and 'd' is a room temperature influence coefficient in the heating working condition.

6. The control method for the air conditioner according to claim 4 or 5, wherein:
in a case where the air conditioner has n air conditioner terminals, the preset indoor temperature is calculated by a formula Tin=(Tin_1+···+Tin_n)/n, wherein 'n' ≧ 2, and 'Tin_1' ..., 'Tin_n' are preset indoor temperatures of the air conditioner terminals.

7. The control method for the air conditioner according to any of claims 3 to 6, wherein the adjusting the operation parameters of the air conditioner according to the predicted terminal temperature comprises:
performing adjustment by applying a PID method or a fuzzy control method.

8. The control method for the air conditioner according to any of claims 3 to 7, wherein the outdoor temperature is predicted according to weather forecast or historical weather data.

9. The control method for the air conditioner according to any of claims 1 to 8, wherein: the second control strategy is a strategy for obtaining minimum energy consumption of the air conditioner, and the second control strategy enables a temperature change difference of the terminal temperature to fall within a preset difference range.

10. The control method for the air conditioner according to any of claims 1 to 9, wherein: the terminal temperature comprises one of an evaporation temperature, a condensation temperature, an outlet water temperature, a return water temperature, an outlet air temperature, a return air temperature, and a radiator temperature of the air conditioner terminal.

11. An air conditioner, comprising:
a data collection module configured to collect a time series of operation data of the air conditioner;
a time scale recognition module configured to recognize response time of an indoor temperature and response time of a terminal temperature according to the time series of the operation data, and set the response time of the indoor temperature as a time interval for adjustment nodes of a first time scale, and set the response time of the terminal temperature as a time interval for adjustment nodes of a second time scale; and
a control module configured to, at each of the adjustment nodes of the first time scale, control operation parameters of the air conditioner by applying a first control strategy, and at each of the adjustment nodes of the second time scale, controlling the operation parameters of the air conditioner by applying a second control strategy.

12. The air conditioner according to claim 11, wherein the control module comprises:
a terminal temperature prediction module configured to predict a terminal temperature, so that the control module controls the operation parameters of the air conditioner according to the predicted terminal temperature and the first control strategy.

13. The air conditioner according to claim 12, wherein the control module comprises:
a unit actuator control module configured to control, according to the second control strategy, the operation parameters of the air conditioner after controlled by the first control strategy, so that a temperature change difference of the terminal temperature falls within a preset difference range.

14. A computer-readable storage medium configured to store computer program instructions which, when executed by a processor, implement the control method for an air conditioner according to any of claims 1 to 10.

15. A control apparatus for an air conditioner, comprising:
a memory; and
a processor coupled to the memory, the processor being configured to perform, based on instructions stored in the memory, the control method for an air conditioner according to any of claims 1 to 10.

16. An air conditioner, comprising the control apparatus for an air conditioner according to claim 15.

17. A computer program, comprising:
instructions which, when executed by a processor, cause the processor to perform the control method for an air conditioner according to any of claims 1 to 10.
